# EUROPEAN PATENT APPLICATION

(11) **EP 1 107 587 A2**
(43) Date of publication of application: **13.06.2001**
(21) Application number: 00310209.2
(22) Date of filing: 17.11.2000
(51) Int. Cl.: H04N 5/64

(54) **Equipment holder**

(30) Priority: 30.11.1999 GB 9928320
(71) Applicant: Roberts Technologies PLC, Weston Super Mare, Somerset BS22 9EZ (GB)
(72) Inventor: Roberts, Paul, Weston-Super-Mare, Somerset BS22 9EZ (GB)
(74) Representative: Beck, Simon Antony

(57) **Abstract**

An equipment holder is provided, primarily for storing an item of television peripheral equipment (4) such as a video recorder. The peripheral equipment is located within a moveable enclosure (3) beneath a lid (6). The lid is arranged to rise on a lifting mechanism to reveal to peripheral equipment (4) which slides towards the front of the storage device for use.

## Description

The present invention relates to an equipment holder, for example in the form of a housing, for use with entertainment equipment peripheral to and associated with a television.

In recent years the range of additional electronic equipment intended for connection to a television has greatly increased, impacting adversely on the space required adjacent to a television and also on the overall appearance of the resulting collection of equipment. Such peripheral items include video tape recorders, digital versatile disk systems, satellite decoders, digital satellite decoders and digital terrestrial television decoders, audio equipment and games consoles.

It has become commonplace for television stands to incorporate a shelf beneath the television upon which one or more peripheral items can be placed. A draw back of this feature is that it compromises the ease of use of the or each peripheral item, often requiring the user to get down on the floor to load or unload a data carrier, such as a video tape, or to operate the controls of the item.

According the present invention, there is provided an equipment holder for holding a television and at least one item of equipment selected from entertainment equipment, audio-visual equipment or television peripheral equipment, wherein the television is provided in a first region of the equipment holder and the further item of equipment is stored on or in a movable element, which movable element is movable between a first position where the equipment is positioned above the television and is presented for use, and a second position where the equipment is concealed, and in which the movable element undergoes a combination of vertical and forwards motion, or undergoes rotational motion, as it moves between the first and second positions.

It is thus possible to provide an equipment holder which serves to reduce the general clutter around a television set, and which also can protect equipment against inadvertent damage, deliberate damage, theft or misuse. The equipment holder may be provided as a stand alone unit or incorporated into an enclosure for one or more other items of equipment.

The equipment holder may be in the form of a stand into or onto which an existing television may be fitted. Alternatively the equipment holder may be provided as a unit designed to fit over, around or adjacent the back of an existing television. The equipment holder may fit onto the stand for the television provided by the television's manufacturer. As a further alternative a television may be an integral part of the equipment holder.

The equipment holder might comprise a forward facing region for accepting the display device of a projection television system or a flat screen television system (for example a plasma flat screen) or a more conventional display technology such as a liquid crystal display or a cathode ray tube display device.

Preferably the moveable element is a shelf, bracket or a box. Additional moveable elements may also be provided, for example in the form of further moveable shelves, brackets, boxes or alternatively as moveable lids or panel portions of the equipment holder. Preferably, when the moveable element is in the form of a box, the box is open at least along one side, for example it's front.

Advantageously the or each moveable element within the equipment holder is driven by a motor. The motor is preferably an electric motor, although mechanical motors where potential energy is stored in a spring or other mechanical device may also be used.

Advantageously, a motor controller is provided which is responsive to controls on the front of the cabinet and/or an infrared, radio frequency or other remote control. The controller may be trained to recognise the control commands for one or more devices located within the cabinet, and to present the correct device at the front of the cabinet after having received and analysed the control commands issued by a remote control for that particular device. The commands intended for the equipment which cause the equipment to be presented for use may be edited by the user such that only some of the commands cause the equipment to be presented for use.

Advantageously, the cabinet further includes a remote control link, for example an infrared repeater or optical system guiding infrared from the exterior of the cabinet towards the or each device when it is at its stowed position, in order that a remote control may still be used to operate the equipment.

The present invention will further be described, by way of example, with reference to the accompanying drawings, in which:
Figure 1 is a cutaway perspective view of a equipment holder constituting an embodiment of the present invention, showing a peripheral device at a stowed position;
Figure 2 shows the cabinet of Figure 1 with the peripheral device at a working position;
Figure 3 shows an alternative embodiment of a equipment holder in which the peripheral is at a stowed position;
Figure 4 shows the cabinet for Figure 3 in which the peripheral device is moved to its working position;
Figure 5 schematically illustrates an equipment holder constituting a further embodiment of the present invention, with the peripheral equipment at a stowed position; and
Figure 6 shows an equipment holder of Figure 5 with the peripheral equipment at a working position.

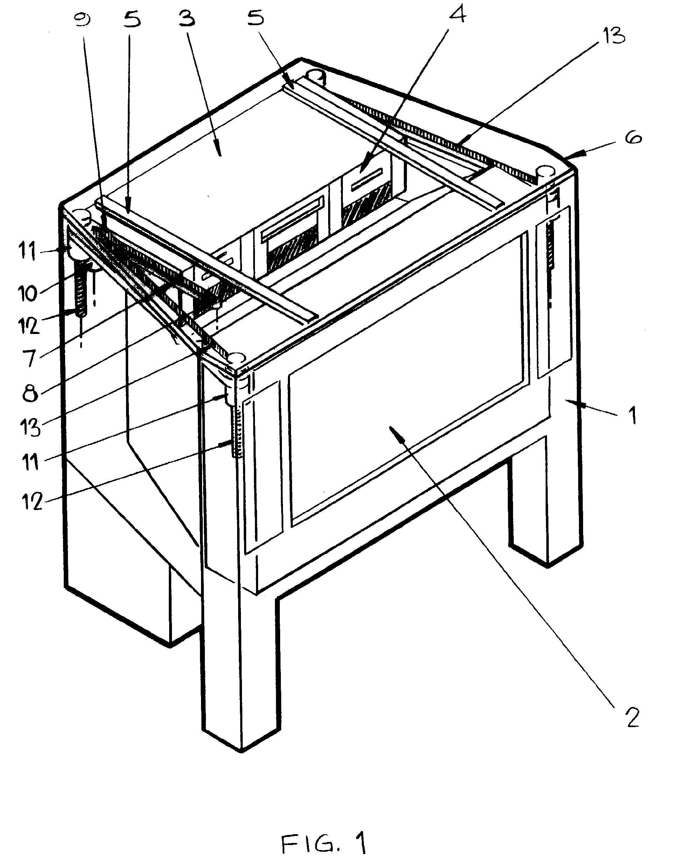

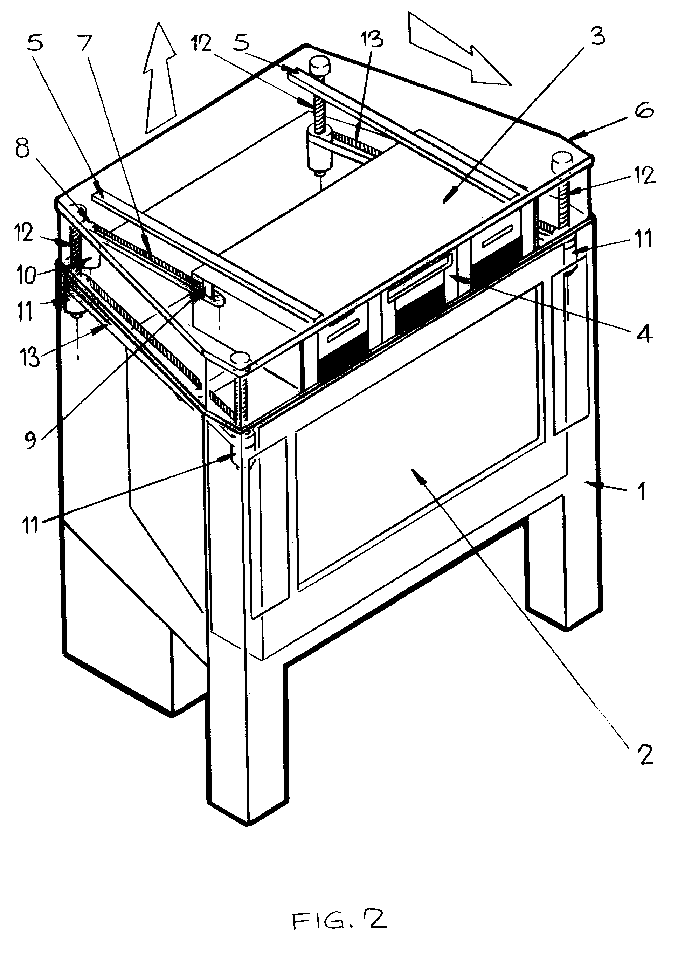

Figure 1 schematically illustrates an enclosure, generally indicated as 1 which has a first region containing a television 2. The equipment holder also has a storage region, generally indicated 3, for storing one or more peripheral pieces of equipment 4. The peripheral pieces of equipment may, for example, be a video cassette recorder or a DVD player/recorder. The storage region is in the form of a box like housing 3 suspended on a pair of rails 5 mounted on the underside of a top 6 of the cabinet 1. A drive belt 7 extends between a first pair of pulleys 8 which define a path parallel to the rails 5. The belt 7 is secured to the housing 3 by a fixing 9 in order that motion of the belt around the pulleys 8 can cause the enclosure 3 to slide along the rails 5 to move the enclosure forwardly or backwardly. One of the pulleys, in this example the rearmost pulley, is connected to a motor 10 so as to drive the housing 3 along the rails between "display" and "conceal" end positions. Four pulleys 11 are held against vertical motion (by means not shown). Each pulley has an internally screw threaded surface which engages with an associated lead screw 12. The pulleys 11 located towards the rear of the cabinet are each connected to a separate synchronised motor (not shown). The pulleys are grouped into pairs with motion of a rear one of the pulleys 11 being transferred to an associated forward one of the pulleys, by a belt 13. The lead screws 12 are attached to the underside of a top of the housing 6 in a manner that prevents rotation of the lead screws around their longitudinal axis, but which may permit slight motion of the longitudinal axis with respect to the top 6. In use, when it is desired to use the peripheral equipment 4, the motors adjacent the rear pulleys 11 are energised to rotate the pulleys. The motion of the motors cause the pulleys 11 to rotate about their respective lead screws 12, and thereby to cause the top 6 of the cabinet to be raised. The housing 3 then slides forwards towards the front of the cabinet under control of the motor 10. Individual motors may be provided for each task and controlled by a central controller. The pulley sizes and, if necessary, intermediate gearing, can be selected in order that these motions are synchronised to one another and can be driven from a single motor. Thus, energisation of the or each motor causes the top 6 to be raised (as shown in Figure 2) and the enclosure to move towards the front of the cabinet. This arrangement has particular advantages in that the "worm drive" arrangement formed by the nut and lead screw is capable of raising the top 6 of the cabinet even whilst it is bearing relatively heavy loads. Furthermore, the top of the cabinet remains horizontal and will travel between the open and closed positions in a controlled manner. Thus further equipment and/or other items can be left on the top of the cabinet even when it is desired to use the peripheral device. Additionally, provided that the transfer efficiencies of the nut and lead screw arrangements are sufficiently low, the load of the top 6 and any items thereon will not be able to back drive the motors, or cause the top to descend even if a belt fails

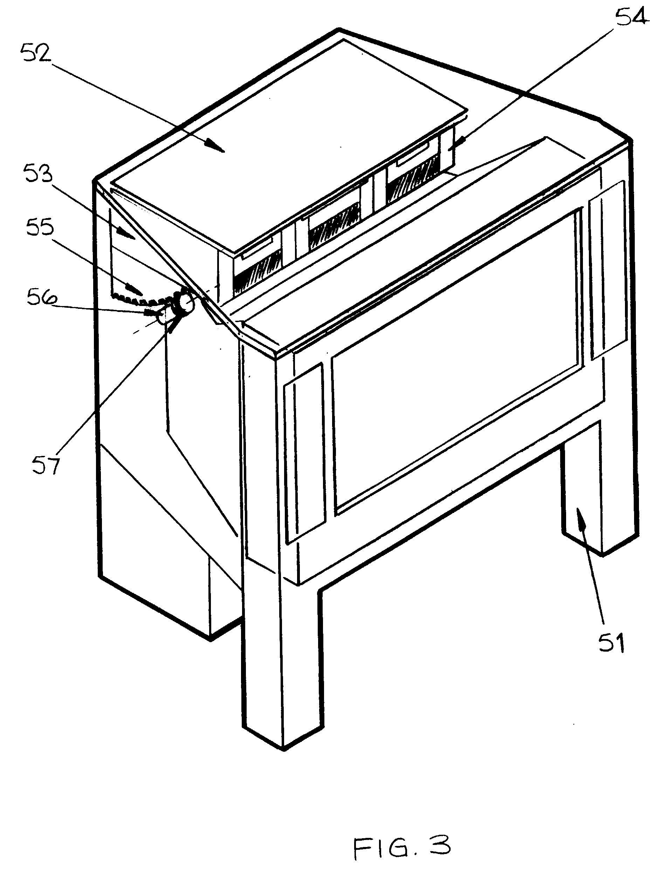

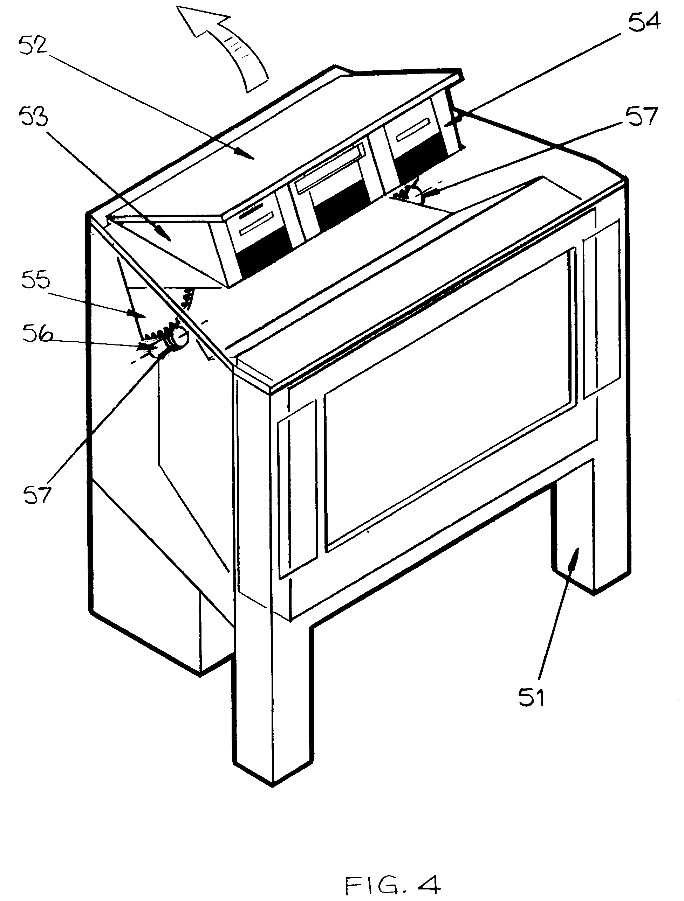

Figure 3 shows an alternative embodiment in which the top of the cabinet 51 has a hinged flap portion 52. The housing 53 for the or each peripheral device 54 is secured to the underside of the flap 52. A toothed gear segment 55 is secured to the side of the housing 53 and has a centre of curvature corresponding to the axis of the hinge of the flap 52. The toothed gear 55 engages with a helical thread 57 carried on a motor 56. The toothed gear 55 and helical thread form a worm drive such that the gear 55 can be made to rotate about its axis of rotation and in so doing move the housing 53 from the position shown in Figure 3 to the position shown in Figure 4, and back again. As shown in Figure 4, a corresponding arrangement is provided on the other side of the housing 53 such that both sides are driven between the open and closed positions in unison.

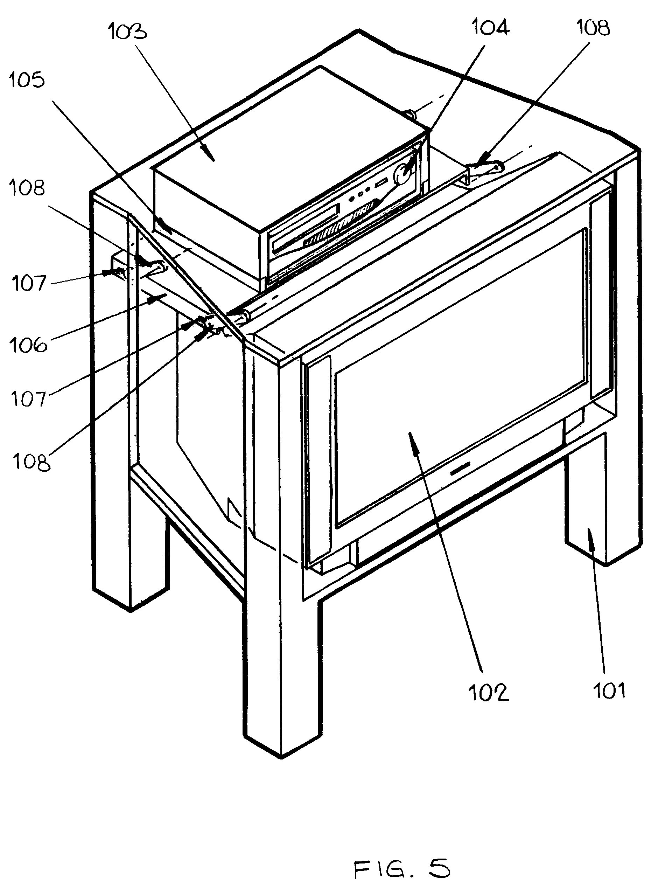

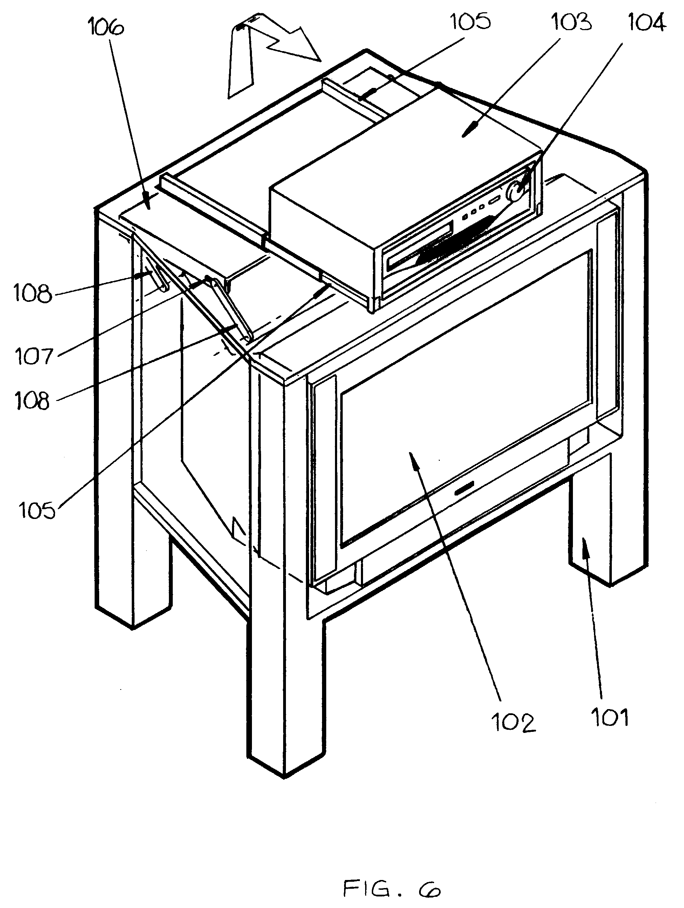

Figures 5 and 6 schematically illustrate a further embodiment of the present invention in which a wide internal bracket 106 extends from side to side of the television cabinet 101 and which may be held against front and rear motion by suitable restraining means. The bracket 106 is connected to front and rear parallelogram arms 108, on each side of the bracket by elongate slotted mountings 107 which enable the radial motion of the arms to be converted to vertical motion. The parallelogram arms 108 are, in turn, mounted to fixed points within the stand. The arms 108 can be pivoted, under the control of at least one motor (not shown), between the position shown in Figure 5, where the portion of the arms which connect with the bracket are below the portion which connects with the cabinet, this corresponding to the stowed position of the peripheral item 104, and to the position shown in Figure 6 in which the arms move to raise the bracket 106 above the level of the top surface of the television. Furthermore, as shown in Figure 6, telescoping arms 105 may also be provided to drive a housing 103 attached thereto forward. The telescoping arms may be formed by a driven cog on one part of the arm engaging with a rack located on a facing surface of the arm. A shelf supporting the equipment may also have rubber castors for similar elements formed on a lower surface thereof such that these bear the weight of the equipment as it slides forwardly.

It is thus possible to provide an enclosure or concealable housing into which one or more peripherals can be placed. If the height or width of the enclosure is increased, multiple peripheral elements may be stored on the same shelf or separate individual shelves may be provided. The position of the housing, when fully raised, affords good visibility of any displays on the peripheral equipment, and allows easy operation of the equipment and access to removable data carriers, such as discs, tapes and cartridges. When the housing is retracted and lowered, its upper face is flush or near flush with the top of the television set. In this position, any contents are hidden from view. A lock facility may be incorporated to prevent unauthorised opening of the housing and operation of the contents therein. This provides not only an anti-theft capability, but also allows parents to prevent children using equipment or pushing foreign objects into, for example, the VCR slot.

A photo detector (not shown) may be provided on the front surface of the cabinet and be connected via a relay circuit to energise a photo-diode provided within the interior of the cabinet and located at a position such that infrared detectors on the peripheral equipment can view the photo-diode when the equipment is at the stowed position. Thus infrared commands may still be issued to peripheral equipment even when it is at the stowed position. Alternatively, a passive repeater may be formed by a light guide, either formed by a series of mirrors or by total internal reflection within a block of perspex or a fibre optic cable.

The cabinet may be arranged to accept modular electronic components such that a modular television or other entertainment systems may be integrated into the cabinet for future upgradability.

## Claims

1. An equipment holder (1) for holding a television (2) and at least one item of equipment (4) selected from entertainment equipment, audio-visual equipment or television peripheral equipment, characterised in that the television (2) is provided in a first region of the equipment holder and the further item of equipment (4) is stored on or in a movable element (3, 53, 106), which movable element is movable between a first position where the equipment is positioned above the television and is presented for use, and a second position where the equipment is concealed, and in which the movable element undergoes a combination of vertical and forwards motion, or undergoes rotational motion, as it moves between the first and second positions.

2. An equipment holder as claimed in claim 1, characterised in that a television is provided as an integral part of the equipment holder.

3. An equipment holder as claimed in any one of the preceding claims in which the moveable element (3, 53, 106) is a shelf or bracket, or a housing.

4. An equipment holder as claimed in any one of the preceding claims characterised in that the or each moveable element is driven by at least one motor.

5. An equipment holder as claimed in any one of the preceding claims, characterised in that the motion of the moveable element is controlled by a controller, the controller being arranged to provide security coded access and/or to be responsive to a remote control.

6. An equipment holder as claimed in any one of the preceding claims characterised in that the equipment holder further comprises a remote control link such that commands can be relayed to an item of equipment (4) when it is at the second position.

7. An equipment holder as claimed in claim 5, in which the controller is arranged to recognise remote control commands intended for the equipment and to move the equipment from the second position to the first position upon detection of commands intended for the equipment.

8. An equipment holder as claimed in any one of the preceding claims, characterised in that the moveable element is positioned beneath a lid (6), and the lid (6) is arranged to lift vertically on a lifting mechanism to reveal the equipment (4) and the first moveable element is arranged to undergo motion to and from a front of the equipment holder.

9. An equipment holder as claimed in any one of the preceding claims, characterised in that the device is provided as part of a stand for a television.

10. An equipment holder as claimed in any one of the preceding claims, characterised in that the device is provided as part of a frame.

11. An equipment holder as claimed in claim 10 in which the frame is arranged to position the moveable element behind a television when the moveable element is at the second position.

12. An equipment holder as claimed in any one of the preceding claims, in which the television is a modular television.
